Europäisches Patentamt

European Patent Office

Office européen des brevets

(11) Publication number: **0 360 764 B1**

(12) **EUROPEAN PATENT SPECIFICATION**

(45) Date of publication of patent specification: **09.02.94** (51) Int. Cl.⁵: **F16H 33/20**, F03G 3/00

(21) Application number: **89830397.9**

(22) Date of filing: **18.09.89**

(54) Apparatus able for converting a rotary motion into a rectilinear motion for the advancement of a self-propelled vehicle.

(30) Priority: **21.09.88 IT 948988**
**28.10.88 IT 951088**

(43) Date of publication of application:
**28.03.90 Bulletin 90/13**

(45) Publication of the grant of the patent:
**09.02.94 Bulletin 94/06**

(84) Designated Contracting States:
**AT BE CH DE ES FR GB GR LI LU NL SE**

(56) References cited:
**EP-A- 0 227 613**
**FR-A- 2 540 570**

(73) Proprietor: **Calzolari, Rino**
**Via di Cammori 52**
**I-50145 Firenze(IT)**

(72) Inventor: **Calzolari, Rino**
**Via di Cammori 52**
**I-50145 Firenze(IT)**

(74) Representative: **Mannucci, Gianfranco,**
**Dott.-Ing.**
**Ufficio Tecnico Ing. A. Mannucci**
**Via della Scala 4**
**I-50123 Firenze (IT)**

Rank Xerox (UK) Business Services
(3.10/3.09/3.3.3)

## Description

The invention refers to an apparatus for transforming a rotary motion into a rectilinear motion according to the preamble of claim 1.

An apparatus of this type is known from EP-A-0227613. This known propulsion apparatus comprises, on a housing unidirectionally movable in a direction corresponding to an axis thereof: a sliding mass designed to take up a position of maximum distance and a retracted position along an axis parallel to said axis of the housing; an auxiliary motor which causes the mass to cyclically take up said position of maximum distance; and means for causing the sudden return of the mass from said position of maximum distance to the retracted position; the momentum and consequently the impulse acquired by said mass during the return phase are equal to those acquired during said phase by the housing, which accordingly moves repeatedly forward by a given length with a unidirectional movement during each forward and backward movement of said mass.

FR-A-2540570 refers to an apparatus for transforming a rotary motion into a rectilinear motion, which discloses the possibility of employing elastic means for the return position of the mass.

The object of the invention is an improvement of the apparatus of EP-A-0227613.

In a first embodiment, the apparatus is characterized by the features of the characterizing portion of claim 1.

In a second embodiment of the same inventive concept, the apparatus is characterized by the features of the characterizing portion of claim 10.

Further advantageous features of the invention are set out in the dependent claims.

The invention will be better understood by following the description and the attached drawing, which shows a practical, non limiting example of the same invention. In the drawing:

Fig. 1 shows in a very schematic way the device according to the invention;

Fig. 2A shows schematically a carriage being restrained for unidirectionally sliding on a plane on which said device is supported;

Figs. 2B and 2C in a very schematic way show, the first the restraint forms of the carriage and the second how it is possible to compare the device with a common traction system with wheels rotated by a driving torque;

Fig. 3 shows schematically, but in greater details, a top view of the apparatus making up the device according to the invention, in the position wherein the centrifugal mass is at its maximum distance position and is about to be moved back;

Figs. 4, 5 and 6 show schematically a sectional view according to a vertical plane passing through the axis of the piston, a sectional view according to line V-V of Fig. 4 and an ensemble plan view of the propulsion unit, respectively, according to the invention;

Fig. 7 shows an enlarged, partial, plan view, with cutaway parts, of the rotating fixture of the propulsion unit;

Fig. 8 shows, in a view similar to Fig. 7, the movements of the centrifugal mass of the unit, the cylinder-piston system and its auxiliary members being omitted for the sake of clarity;

Figs. 9A, 9B, 9C and 9D show schematically working phases of the unit;

Fig. 10 shows schematically a plan view, partly in section, of a propulsion apparatus according to a further embodiment; and

Fig. 11 shows schematically a side view thereof.

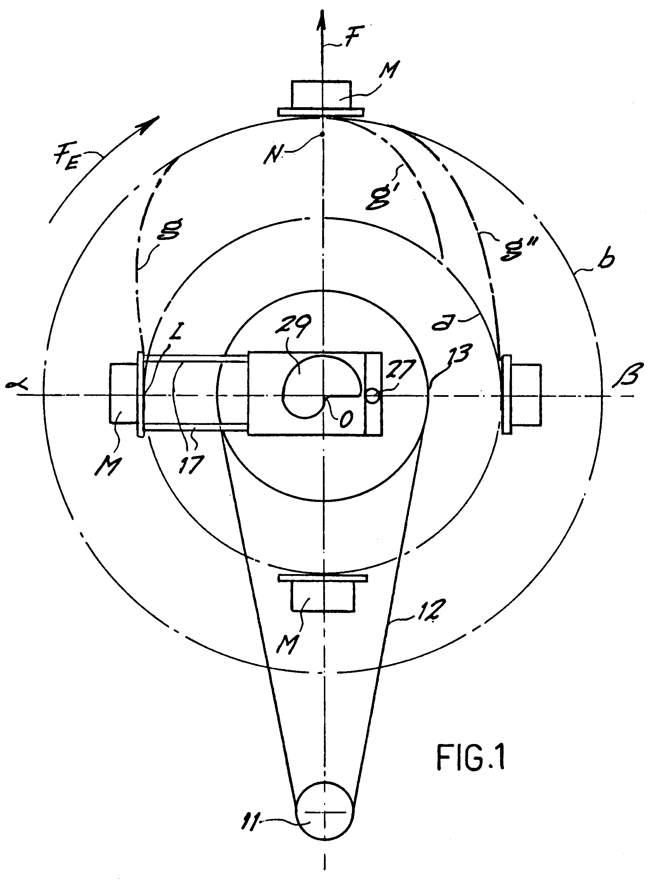

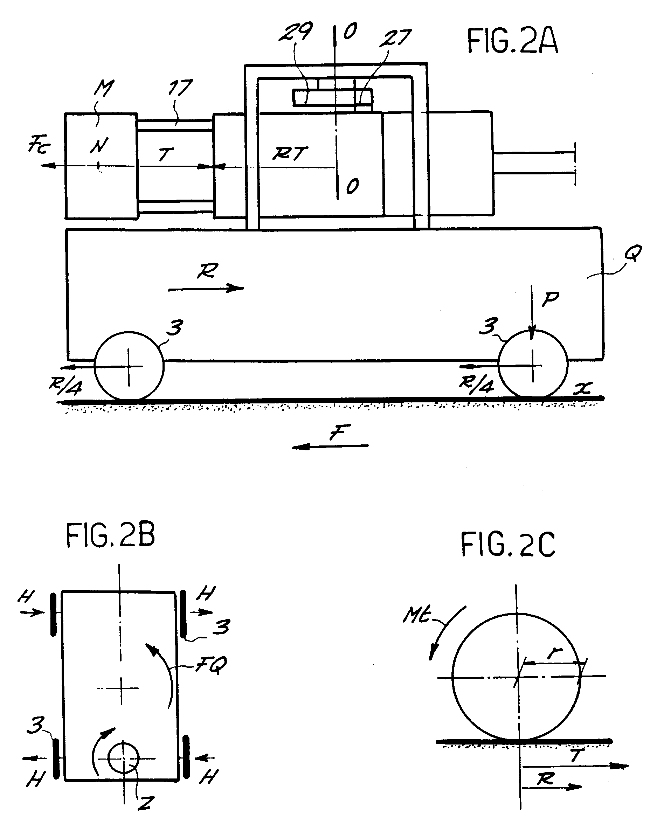

Fig. 1 shows a mass M, which is fixed on the top of columns 17 of a rotating fixture to be described later. Said fixture rotates with uniform motion about an axis O and the mass M travels initially the lower half (Fig. 1) of the circumference of minor diameter designated by a. When the mass M, by rotating in clockwise direction, arrives at L, by centrifugal force, i.e. centrifugal reaction, and being left free to slide radially as it is no longer retained by certain members, it passes from L (on the small circumference) to N (on circumference b of greater diameter) by following a curve g; since, in this way, it increases its distance from the axis of rotation, the centrifugal force Fc (Fig. 2A) to which the mass M is subjected increases as well. Since the travel of the mass M from the retracted position corresponding to the circumference a to the position of maximum distance corresponding to the circumference b is limited by limit stops (better described later on) fixed at the innermost end of columns 17, the force exerted by the mass M on the columns 17 and by these on the fixture - which is made to rotate on a structure solid with the carriage illustrated in Fig. 2A - causes an exchange of momentum between the mass M (whose movement in radial direction comes to a stop) and the structure which tends to move forward in the direction of arrow F. The mass M at position N is still subjected to an intense centrifugal force Fc and, by continuing its rotation, it is forcely brought back, by mechanical means - such as a fixed cam or eccentric 29 - or of thermal means, fluid-operated means or of any other nature, onto the circumference a. In connection with the fact that this return may be more or less sudden, the mass M may run different curves, like those indicated by g' and g'' respectively. The thus re-entered mass M results therefore forced to travel the circunference a, of minor diameter, along the whole lower semi-circunference from β to α opposite to position N. The withdrawal from circumference a as far as to circumference b and the return from b to a of mass M take place instead along the semi-circumference from α to β.

Fig. 2A shows the effects of the return of mass M up to the retracted position. A carriage Q supported on wheels in contact with a horizontal plane carries the mass M which is at position N and is about to be called back (by means, as it will be explained later, of the eccentric 29). Being driven into rotation, the mass M is subjected to a centrifugal force Fc, so that, in order to recall the mass towards the rotation axis O-O a force T shall be applied thereto (which will act, for example, on the roller or tappet 27 in contact with the fixed cam 29), which force T shall be greater than Fc. But to the force T will correspond an equal and opposite reaction RT which (for example through the fixed cam 29) will act on the structure of the carriage Q. If R indicates the total resistance to the advancement of carriage Q, with the apparatus in question mounted thereon, the carriage will move forward according to arrow F when the reaction RT, for a given rotational speed of the fixture carrying the mass M, will result greater than the total resistance R to the advancement of carriage Q. The phenomenon is repetitive, so that once RT has become greater than R, at each revolution of the mass M the carriage will be subjected to a thrust RT that will move it forward.

It is useful to point out that in the case of a vehicle whose advancement is due to driving wheels, it is necessary that the peripheric force T, almost tangent to the tire and applied by the driving wheel to the road surface, exceeds the portion of total resistance to the advancement of the vehicle which is considered to be applied to the concerned wheel to which the half-axle transmits a torque $Mt = (T - R) \cdot r$, where r indicates the radius of the wheel (Fig. 2C).

The rotation of the mass M is obtained through an independent motor (electrical or other type) installed on the carriage Q and which, through a pulley 11 and a drive, will rotate the fixture in clockwise direction, according to arrow FE, with respect to which the columns 17, to which the base of mass M is fixed, are able to slide. Following the rotation of said motor in clockwise direction (in the example of the drawing), the carriage Q will be subjected to a torque equal and opposite to that of the motor, that is, in the direction of arrow FQ (Fig. 2B) and this torque will be balanced by restraint forces H, acting on the carriage wheels, caused by the friction thereof with the contact plane, due also to the considerable carriage load weighing on the structure. Persisting, however, a trend of the carriage to rotate, two centrifugal masses may be provided, like that indicated by M, driven into opposite directions one to the other by two separate motors or by a single motor with two drives; in this case, the internal forces of the structure shall support the two opposite torques, but any trend to rotate the carriage will be eliminated.

Incidentally, the concerned centrifugal mass or masses may be rotated - together with their fixture and devices - also on a plane perpendicular to the carriage plane, which has been supposed horizontal, the described mechanical phenomena remaining unchanged.

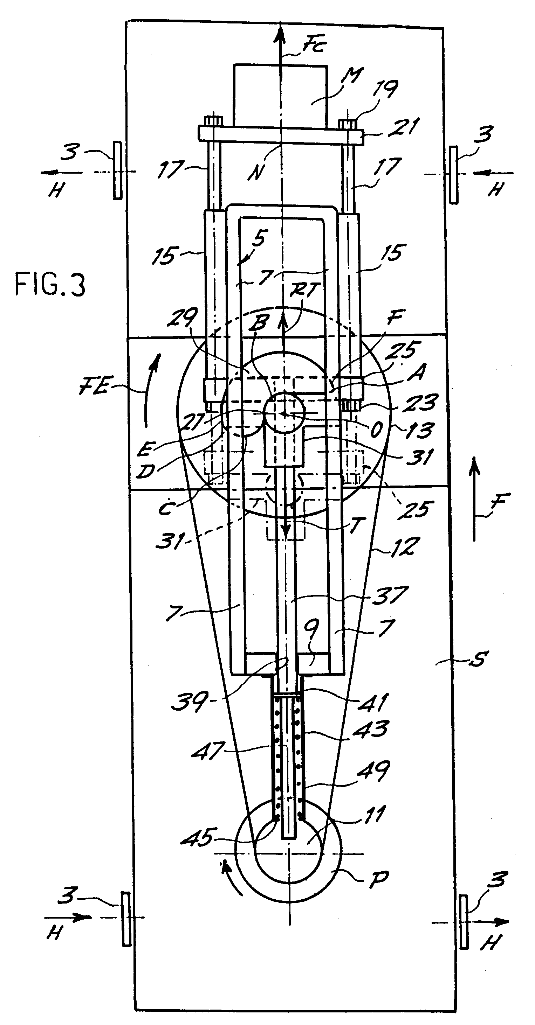

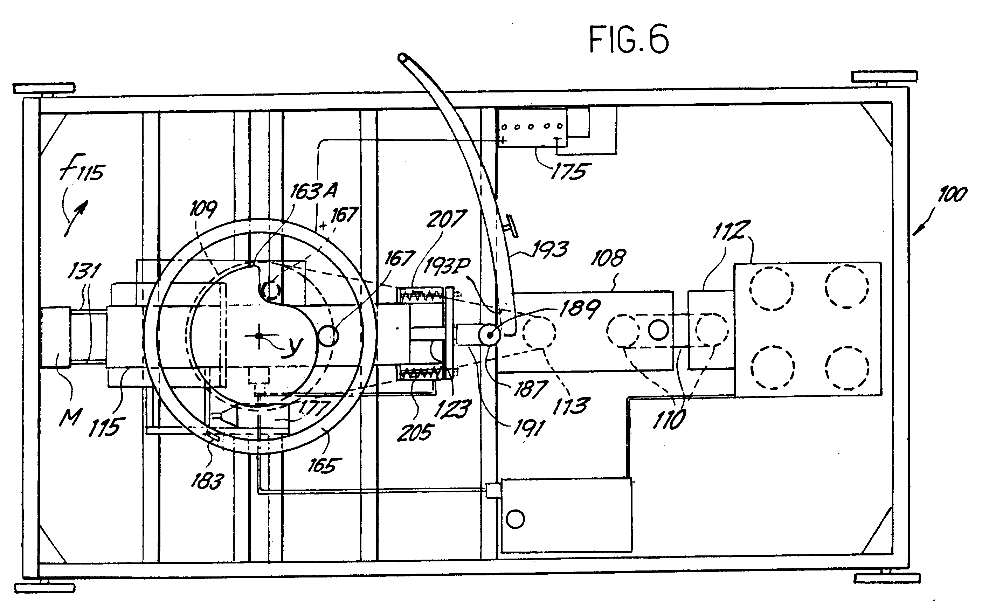

For a detailed description of the apparatus reference is now made to Fig. 3, in which the mass is at position of the maximum distance, i.e., at N (Fig. 1), and is about to be moved back. The apparatus according to the invention comprises a housing S, provided with wheels 3, for the support and guide on a plane which, as stated earlier in this description, is supposed to be horizontal. The wheels 3 engage the housing so that this can move unidirectionally according to arrow F, that is parallel to the middle longitudinal plane of the same housing. The housing S may be assimilated to a carriage having longitudinal development, comprising a horizontal plane above which a fixture 5, formed as an U-shaped bracket whose legs 7 are connected to each other at their ends by a crosspiece 9 is made to rotate in the direction of arrow F5 about an axis orthogonal to said plane. The rotation axis of the fixture 5 is represented by its trace axis O (in the example of the drawing) and such rotation is obtained through a belt drive 11, 12, 13, or the like, which transmits to the fixture 5 the motion of a motor P (electrical, endothermic, or of any other type). Between the motor P and drive 11, 12, 13 a variator may be interposed for selecting the rotation of fixture 5. The fixture 5 is supported by an underlying platform (not shown) driven into rotation by a shaft supported by the plane of the housing 5 and solid to the wheel 13.

In the vicinity of the central part of the U-shaped fixture 5 two pairs of side guides 15 are secured to the legs 7 for the slide of two pairs of rods 17 in the direction parallel to the longitudinal axis of symmetry of the fixture. The ends of the rods 17 are secured by nuts 19 to a plate 21 on which there is fixed a centrifugal mass M (of parallelepiped form in the example of the drawing). The opposite ends of the rods 17 are fixed by bolts 23 to another plate 25 and the length of the rods 17 is such that the mass M may take up both the retracted position by travelling along the circumference a (Fig. 1) and the position of maximum distance from the axis of rotation by travelling along the circumference b. Following the rotation of fixture 5, a modest centrifugal force acts upon the mass M in the "retracted" position, while such centrifugal force becomes significantly high at the said position of maximum distance; upon reaching this position, the mass M, after its radial displacement guided by the rods 17 slidingly movable within the guides 15 has, of course, a high momentum. Once reached this position - in which is held by the rods 17 - the mass M would remain permanently in said position if it were not for the return means 27, 29 which bring it back, at each revolution of fixture 5, to the retracted position. Numeral 27 indicates a roller tappet disposed for following the eccentric or cam profile 29. The eccentric 29 does not rotate, as it is fixed to a portion (not shown) of the housing S, which is above the fixture 5 and is so structured and connected as to support, without deformations, the high forces which it can receive from the tappet 27. The tappet 27 may rotate idly about a shaft cantiliverly projecting orthogonal to a T-shaped skid (in the example of the drawing), which can slide within side guides (not shown) formed on the legs 7 of the fixture 5; when the tappet 27 is pushed outwardly by the eccentric 29, it tends "to overturn" the skid 31 and this overturning is prevented by the rolling bearings which slide within said side guides on which they discharge said overturning torque.

The eccentric profile 29 is crucial as far as the operation of the apparatus is concerned; it comprises an almost rectlinear portion AB, with which the tappet 27 remains in contact when the mass M moves from the retracted position to the position of maximum distance. The portion AB is followed by a portion BC, with a shape heavily inclined with respect to the preceding one, which causes the return - which must be sudden, i.e., abrupt - of the mass M to the retracted position. The length BC is joined at D by a wide length EF, shaped like a circle arc, along which the tappet 27 keeps the mass M in retracted position; from the length EF, a very short junction FA leads to the length AB, since for the operation of the apparatus, it is very important that the "output" of the mass M takes place abruptly, and that the return occurs enough abruptly as well.

The fixed eccentric 29 is so oriented that the return of mass M is completed when the fixture 5 has its own longitudinal axis parallel to the direction of advancement of the housing S, after a rotation of 180°. By such return, the momentum owned by the mass M upon its reaching the position of maximum distance, is partially or mostly transferred, through the return means 29, 27, to the housing S which, at each revolution of the fixture 5, receives a thrust in the direction of said axis - and thus of the arrow F - which causes its displacement in the direction of the carriage advancement. In this way, the rotary motion imparted to the fixture 5 by the motor P - which the housing 1 is supplied with - is transformed, by the apparatus according to the invention, into a rectilinear motion of the same housing according to arrow F.

The skid 31 is connected to the plate 25, so as to move solid therewith, but said connection is carried out through articulation means for the two parts. This is necessary for allowing the skid 31 to have some degree of freedom of movements relative to the plate 25 which, being rigidly connected to the rods 17, could not follow such movements (due to the forces transmitted by the tappet 27), although they are of little magnitude.

The skid 31 is in turn connected to a rod 37 sliding within a hole 39 of the crosspiece 9, which rod projects beyond said crosspiece and is solid to a cup member 41 able to compress a compression spring 43. The coils of the spring 43 develop around the extension 47, of reduced trasverse dimensions, of the rod 37 past the cup 41, and said spring reacts against the bottom wall 45 of an U-shaped bracket 49, said bottom wall having a hole for the sliding of the extension 47. When, because of the action of the eccentric 29 on the roller 27, the mass M is recalled to take up its retracted position, the skid 31 pushes the rod 37 in the direction opposite to arrow F, so that the cup member 41 compresses the spring 43 against the bottom wall 45. Therefore, the spring 43 accumulates and retains some amount of elastic potential energy for all the time the mass M is in retracted position. When the mass M is launched, that is, when the tappet 27 runs the length AB of the eccentric 29, this potential energy is released in the sense that the spring 43, through cup 41, rod 37, skid 31 and columns 17, imparts a thrust to the mass M. This thrust action has the purpose of causing the mass M to take up, in a very short time, a position as far away as possible from the rotation axis O-O of the fixture 5, so as to be immediately subjected to a centrifugal force and pushed outwardly thereby.

The above description refers to an apparatus in which the return of the mass M (or of two counter-rotating masses) is provided through a tappet 27 which follows the profile of a fixed eccentric 29. It is clear, however, that the result of having the momentum (or portion of the momentum), of the centrifugal mass M transferred to the housing S to move it forward, may be achieved by providing return means different from the described mechanical means formed by the coupling of an eccentric 29 and a tappet 27. For example, elastic means may be provided able to intervene in the sense of exerting a sudden return action on the mass M when it is in the position of maximum distance, said elastic means being possibly "loaded" during the rotation steps of the fixture 5 between a "launch" of mass M and the next.

As an alternative to said elastic means, pneumatic means may be provided (such as a compressed air operated cylinder-piston system provided for the return) or even thermal means, that is, means able to transform into a mechanical energy, for the return, the pressure energy generated by combustion (steam-operated cylinder; cylinder of an endothermal motor without crank mechanism, etc.).

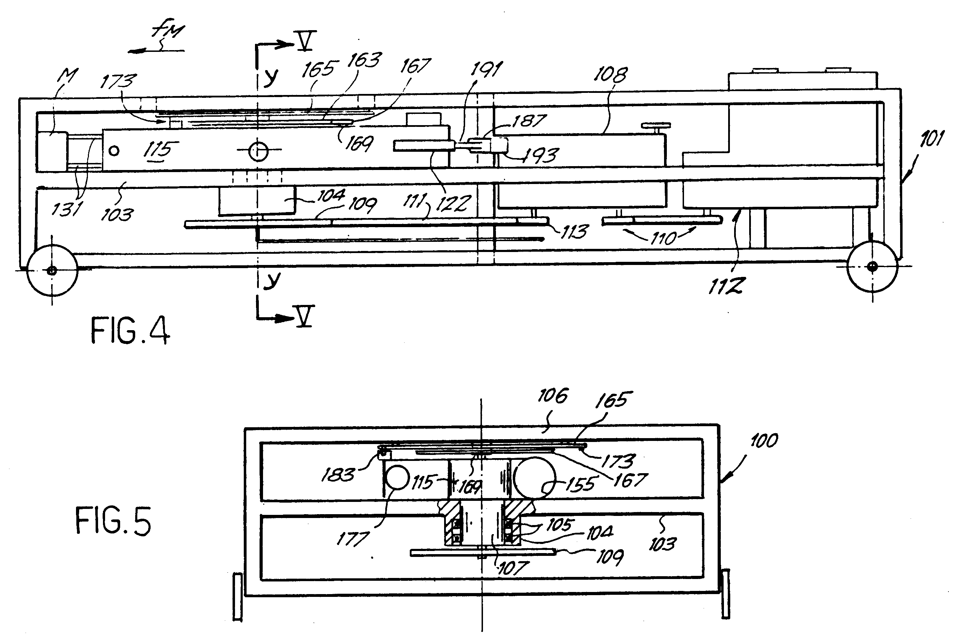

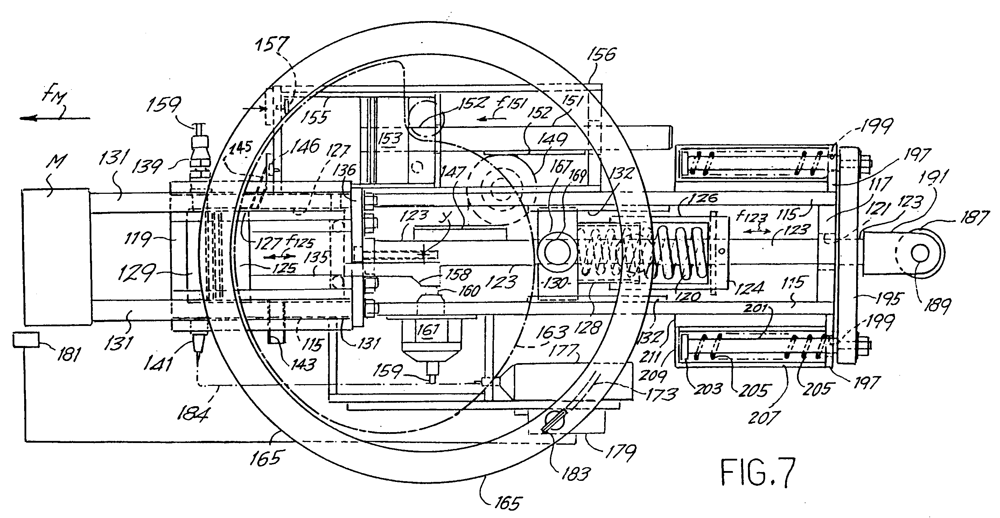

According to the example of Figs. 4 to 6, the propulsion apparatus according to the invention comprises a fixed structure 101, movable on a carriage or other means able to advance unidirectionally with very limited friction, which has a stout support framework 103. At a position on to the left (in the example of the drawing, Fig. 4) a hub 104 projects under the framework 103, said hub being provided with a pair of support bearings 105 having also a thrust bearing function for the rotation of a short vertical through shaft 107. On the lower end of the shaft 107 a chain wheel 109 is keyed which, through a chain 111 and a pinion 113, is driven into rotation by a speed variator 108 which is actuated in turn, via a drive 110, by an auxiliary motor 112 (endothermal, electrical or of other type). Through the shaft 107, the chain wheel 109 drives into rotation, in the direction of arrow f115 and above framework 103, a fixture 115 made up of an U-shaped bracket with the central part 119 of the U disposed on the left (in the example of the drawing), while the legs of the U are connected, on the right hand side, by a crosspiece 117. Outside the walls 116 of the fixture 115 guides 137 are fixed inside which columns or rods 131 slide (four in the example of the drawing), on top of which a centrifugal mass M is fixed in the central part of the U. On the opposite end, the rods 131 are fixed to a transverse plate 136. The centrifugal mass M, after the sliding of the rods 131 may take, by moving radially, a retracted (or re-entered) position, in which it is placed at the minimum distance from the axis of rotation Y of the fixture 115, and a position of maximum distance from said axis (shown in Fig. 7), in which the mass is subjected to the maximum centrifugal force or reaction. In order to take up the re-entered position, the mass M must be recalled, at a suitable angular position, by a force greater than said centrifugal force; characteristically, according to the invention, the return of the mass M takes place by means of a piston 125 sliding within a cylinder 127, the cylinder-piston system 125-127 making up, together with a head 129, a crankless two-stroke combustion engine. The piston 125, whose rear is fixed to the plate 136 through the symmetrical columns 135 (four in the example of the drawing), and which slides thereby solid with the mass M, causes the return of said mass during the expansion cycle of the engine, as will be better explained later, at each revolution of the fixture 115. The walls 127L of the cylinder 127 are fixed within the walls of fixture 115 and the piston 125 may sealingly slide inside the cylinder 127, performing a working stroke equal to the one of mass M with which it is connected as above described.

The structure 101 (Fig. 4 and 5) has a portion 106 which overlaps the fixture 115 which thereby rotates between the portion 106 and the housing underneath it to which the hub 104 is fixed. To the portion 106 an eccentric 163 and a flat ring 165 are fixed. With the fixed eccentric 163 a roller or tappet 167 is engaged, which can rotate idly about a shaft 169 cantiliverly projecting upwards from a block or skid 130 sliding on opposite guides 132 fixed to the walls 116 of fixture 115. Within a hole 121 of crosspiece 117 a rod 123 may slide in both directions of arrow f123, which rod is fixed at one end to plate 136 so as to slide solid with piston 125 and with the mass M. The rod 123 is also connected to the skid 130 through a cushioning group 120, 124, 126, 128, to be described later, which, except in case of forces of considerable magnitude on roller 167 and on shaft 169, behaves like a rigid connection and such it is considered in describing the operation of the propulsion unit according to the invention, during which the skid 130 may be normally considered as being solid with rod 123.

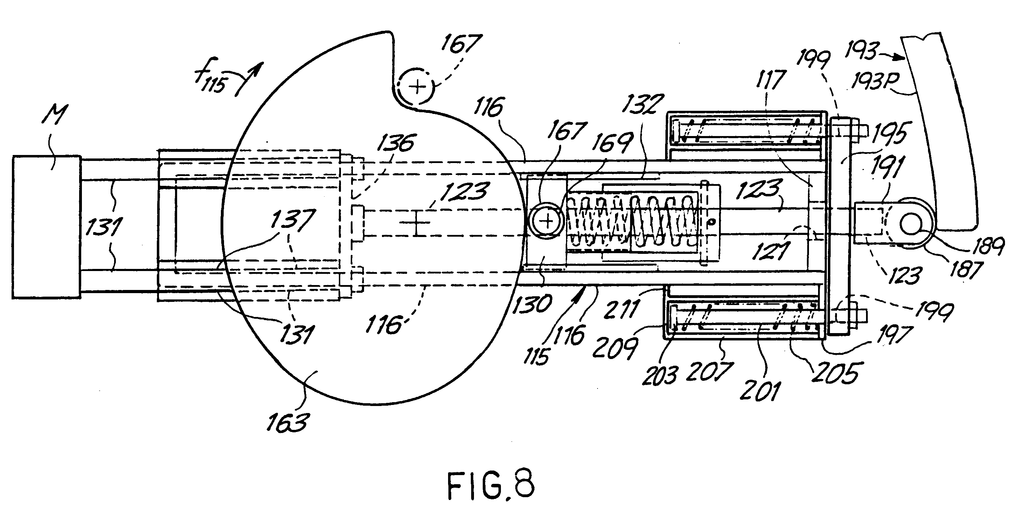

The mutual action between the eccentric 163 and the roller 167 comes into effect to determine the position(s) of the mass M relative to the axis of rotation of fixture 115, the mass resulting solid with the rod 123 through rods 131 and plate 136. The profile of the fixed eccentric 163 (Figs. 6 and 8) is so designed as to be able to retain the mass M by the roller 167, after the return to the retracted position, for about half a revolution of fixture 115, that is, when the mass comes to rotate on the right hand side of Figs. 4 and 7; afterwards said profile allows the moving away of the mass as far as the position of maximum distance from the axis of rotation and, through a relatively steep length, is able to recall, i.e., to cause the mass M to return, after it has reached such position of maximum distance and of maximum centrifugal force. Since, however, in the propulsor according to the invention, the return of the mass is obtained by the stroke of piston 125 during the expansion cycle, the eccentric 163 must, usually, just keep the mass M in said retracted position, as already mentioned, for about half a revolution.

The internal combustion engine 125, 127, 129 is provided (in the example of the drawing) with an injector 139 for the fuel, with a spark plug 141, with an exhaust duct 143 and a duct 145 for the admission of the scavenging air. In the expansion cycle of said engine, the piston 125 moves away from the head 129; on the rod 123 (Fig. 7) there is fixed a rack 147 which, when the rod 123 moves back solid with plate 136 and thus with piston 125, it causes, through an idle gear 149, the advancement in the direction of arrow f151 of a rod 151, also provided with a rack 152 meshing with gear 149, on one end of which rod a piston 153 is fixed; the piston 153, together with a cylinder 155, makes up a pump for pumping scavenging air during said expansion cycle inside the cylinder 127 through the inlet duct 145. The rod 151 slides within a guide hole formed on the wall 150 of a structure 156 fixed on a wall of the fixture 115; the pump 153, 155 is equipped with a suction valve 157, while a non-return valve 146 is located on duct 145. The fuel reaches injector 139 through a pipe 159 which comes out from an injection pump 161 driven by a device comprising an inclined plane 158 and a roll 160; the inclined plane 158 is disposed on the rod 123 at such a position as to cause the injection during the compression cycle or about at its end. The injection pump 161 sucks the fuel from a fixed reservoir for example through a rotating valve (not shown).

The ring 165 - which can be fixed to isolating blocks - has a front contact ring 173 on which a contact wheel 183 rolls supported by a fork solid with the fixture 115, to draw the positive of a low-voltage direct current for the supply of the primary of a common distributor coil 177 whose secondary feeds high-voltage current to the plug 141 and which is fixed to a wall 116 of the fixture 115. The positive of said primary current, supplied by a battery 175 (Fig. 6), reaches, via the wheel 183, an interrupting member 179 (Fig. 7) which has the same functions as the so-called "contact breaker". The primary of the coil receives the negative through the metal mass of structure 101 and fixture 115; the member 179 is driven by a sensor 181 (made up of an accurate proximity detector or the like), which transmits a signal thereto - to cause the interruption of said low voltage current - the moment the mass M reaches the position of maximum distance from the axis of rotation of fixture 115, on which the piston 125 has ended the compression cycle and when, on the same time, the axis of the cylinder-piston system 127, 125 becomes parallel to the advancement direction of structure 101 with the head facing the side towards which the advancement must occur, that is, in the position shown in Fig. 7. In such position, for every cycle of engine 125, 127, 129 - taking place in close connection with the movements of mass M - owing to the intervention of member 179, the coil 177 emits a high-voltage current which, through a cable 184, causes a spark between the electrodes of the plug 141 thereby determining the ignition and burning of the mixture compressed inside cylinder 127, with a strong push on head 129 and the back movement of piston 125; the piston 125 performs thus its expansion and gas exhaust stroke and causes the return of mass M to the retracted position, by transmetting a force to plate 136 greater than the centrifugal reaction of said mass at the position of Fig. 7.

Said force is equal and opposite to the gas thrust on the head 129, which is transmitted to the structure 101 which, because of the short interval repetition of such thrust, is thereby moved forward in the direction of arrow fM.

Prior to the burning and expansion cycle, there had been in the engine 125, 127, 129 the scavenging phase by the pump 153 and 155 (partially simultaneous with the expansion) and then the compression and injection (by the injector 139) phases, the compression being caused by the radial movement of the centrifugal mass M until it reaches the position of Fig. 7, and the scavenge proceeding partially in the short period during which the mass remains in the retracted position.

To the portion 106 of the housing 101, there is fixed also an arc-shaped eccentric 193 through which a "pre-launch" of mass M is obtained. In contact with the eccentric 193 is a roller 187 rotating about a shaft 189, which is in turn supported by a fork 191 fixed to the end of rod 123 projecting outwardly of the hole 121. With the mass M being at a fully re-entered position, the roller 187 comes in contact with the leading edge of the eccentric 193 from which, upon rotation of fixture 115, is pushed progressively, along with rod 123, towards the rotation axis Y-Y of said fixture. The action of the eccentric 193 ends up at the end of its inner profile 193P, but usually even before inasmuch as, with a sufficiently high rotational speed, the mass M is endowed with and thus moved by a sufficient centrifugal reaction and the roller 187 moves away in advance from said profile. The presence of profile 193 is, however, useful at the low rotation speeds of the fixture 115. For such low rotation speeds, in fact, a further device (which is of elastic potential energy build-up type) is connected with the rod 123 via a crosspiece 195 and cooperates with the eccentric 193 for a pre-launch in centrifugal direction of the mass M so that the latter be subjected in time to a high centrifugal reaction and be located at the position of maximum distance from the rotation axis of fixture 115 the moment the axis of the cylinder-piston system 125, 127 results parallel to the advancement direction of the housing 101. At the ends of the two legs of fixture 115 two plates 197 are fixed externally to the crosspiece 117, each one being provided with a hole 199. In each hole 199 there is housed the threaded end of a stem 201, fixed by a nut to an end of the crosspiece 195, and which is provided with a cup 203 on the side opposite to said crosspiece, on which cup a compression spring 205 is made to react, the other end of which is in contact with plate 197. The spring 205 is guided within a cylinder 207 fixed to plate 197 and closed on the opposite side by a plate 209 connected with wall 116 via an appendix 211. During operation, when the mass M reaches the position of maximum return because of the recall action of piston 125, the springs 205 become compressed owing to the moving away of crosspiece 195 (fixed to rod 123) from the crosspiece 117. The potential energy thus accumulated by the springs 205 is given back at the low rotation speeds of the fixture 115 so as to contribute to the pre-launch of mass M in the same way as the eccentric 193. In practice, these two devices will be able either to act simultaneously or to be each one suitable for particular low rotation speeds.

The cushioning group 120, 124, 126, 128 comprises a bowl-like member 126 whose bottom 124 is solid with rod 123. Inside member 126 a tubular trunk 128 may telescopically slide solid with the skid 130. Inside member 126 and trunk 128 inserted therein there is disposed a fairly rigid compression spring whose ends react against the bottom 124 and against the wall of block 130 carrying the shaft of roller 167. The spring 120 keeps the roller 167 in contact with the eccentric 163 and makes it possible that to the displacements of roller 167 (and thus of the skid 130) will correspond equal displacements of the rod 123, except in the case of significant loads on roller 167 that may cause, with the relaxation of spring 120, a slide of skid 130 along rod 123.

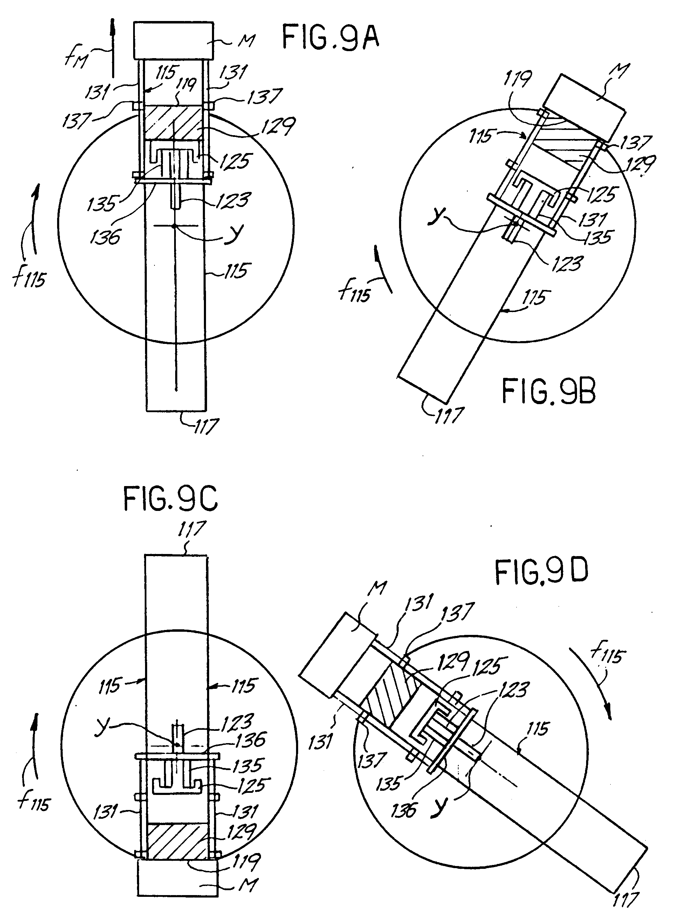

The operation of the propulsion unit according to the invention, as already outlined hereinbefore, may be summerized with reference to Figs. 9A, 9B, 9C, 9D. In Fig. 9A - which corresponds to Fig. 7 - the engine 125, 127, 129 has completed the compression and the burning and the expansion as well as the return of mass M are about to take place. In Fig. 9B the mass has already reached the retracted position, with the roller 167 being engaged with the eccentric 163 for keeping the mass therein for about half a revolution, that is, to keep the mass retracted as shown in Fig. 9C. In Fig. 9B the engine gas exhaust has already taken place and the scavenge phase is under way as shown in Fig. 9C. In Fig. 9D the mass M is at an intermediate point of its travel in centrifugal direction, which it has started because no longer retained by the eccentric 163, and the compression phase of the engine 125, 127, 129 is under way, said phase terminating, as shown in Fig. 9A, with the mass M having reached again its position of maximum distance from the rotation axis of fixture 115. The cycle is thus repeated and for each burning phase, expansion phase and return of mass M, the structure 101 receives (owing to the gas action on the head 120 and to the return action) a particularly strong thrust in the direction of arrow fM which is the direction according to which said structure is bound to advance. As already pointed out, at low angular speeds of fixture 115, the actions of the eccentric 193 on roller 187 or of the elastic-energy accumulator formed by the springs 205 on rod 123, may have possibly taken place, prior to the position shown in Fig. 9D, for an initial radial displacement of the mass M.

The above described telescopic device 124, 126, 128, within which the spring 120 is located, has the purpose to avoid excessive mechanical stresses and possible failures of members in case, for any reason and especially at a high number of revolutions of the fixture, the ignition and the rapid combustion of the mixture should not take place. In this case, the return of the mass is obtained exclusively by means of the eccentric 163 and in a particularly sudden way, with considerable loads especially on the roller 167 and on shaft 169. The above mentionded device, which constitutes an elastic connection between the rod 123, rigidly connected with the mass M, and the skid 130, solid with roller 167, is then caused to intervene so that such loads be dampened when reaching the above mentioned members.

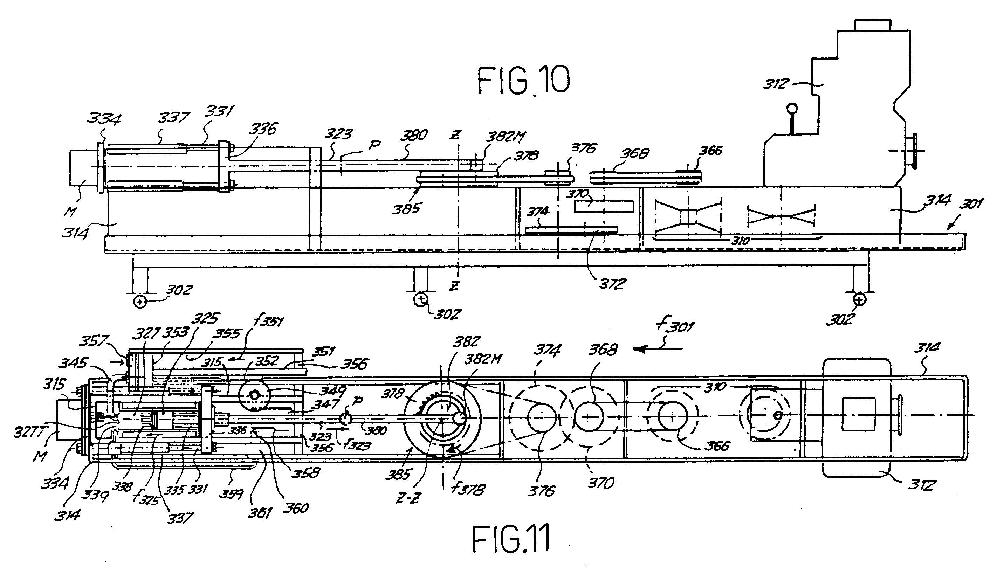

According to the embodiment of Figs. 10 and 11 the propulsion apparatus comprises a housing 301, unidirectionally movable in the direction of the arrow f301, on which there is fixed a structure 314 for the support of the main members of the unit. The housing 301 can move with limited friction for example on wheels 302, which can be engaged with a straight guiding track. Inside and above the structure 314 there is fixed a U-shaped frame 315 which laterally has upper and lower tubular guides 337 for the sliding of rods 331 (four in the example of the drawing). To one end (on the left in the drawing) of the rods 331 there is fixed a plate 336 from the central zone of which columns 335 project which connect the plate 336 to the rear of a piston 325. The piston 325 slides within a cylinder 327 fixed almost to the centre of the frame 315 and makes up therewith a cylinder-piston system of a two-stroke ignition engine. The cylinder 327 comprises a head 327T on which there are fixed a fuel-injector 339 and the end of a duct 345 for the admission of air (via a valve not shown). On the drawing, discharge openings 338 for the outlet of exhaust gas from the cylinder 327 are shown. Owing to the presence of columns 335, rods 331, guides 337 and of plate 336, the piston 325 moves in the direction of arrow f325 solid with the mass M. The longitudinal development of the cylinder 327, the stroke of the piston 325 and the lengths of rods 331 and of columns 335 are such that the mass M is placed in a retracted position, that is, almost in contact with the base of the U-shaped frame 315, when the piston 325 has completed its expansion and exhaust stroke, while the mass M is placed in a position of maximum distance from the frame 315 when the piston 325 has completed its compression stroke, with the piston head very close to the inside of head 327T. A rod 323 projects from the rear of plate 336, which rod is made to axially move solid with piston 325, being guided inside a hole of a crosspiece 356 of structure 314. On opposite side with respect to piston 325, the rod 323 is articulated in P to a connecting rod 380 of a crank mechanism 380, 382 whose crank 382 is of discoidal shape and has a crank pin 382M. The disc-crank 382 rotates about an axis Z-Z and makes up the inner part of a free wheel device 385 which comprises an outer ring 378. The free wheel device 385 is, in the example of the drawing, similar to a "sprocket wheel" for a bicycle drive and therefore, consists of one or more pawls acting on an inner gear, with a suitable toothing, with the result that the device 385 is able to transmit the rotary motion in one direction only. The free wheel device 385, instead of being of "ratchet gear" type as described, it may also be of other type such as, for example, of "rolling bodies" type. The propulsion unit being described comprises also an auxiliary motor 312 (endothermal, electrical or of other type) which, through the variator 310 (which in the example of the drawing comprises a pair of expansion pulleys), through a drive comprising a first pair of gears 366, 368, through a gear reduction unit 372, 374 and a further chain drive with gears 376, 378 causes the rotation of the outer ring of the free wheel 385 in the direction of arrow f378. In practice, this outer ring 378 is provided with a toothing intended to mesh with the chain of drive 376, 378. On the axis which transmits the motion from pulley 368 to gear 372, there is keyed a flywheel 370 of suitable characteristics.

It should be clear at this point how the propulsion unit according to the invention operates. Owing to the presence of the free wheel 385, when the piston 325, because of the fast combustion of a mixture previously compressed between it and the head 327T, performs its expansion stroke, the rod 323 moves back along with the piston, and the crank mechanism 380, 382 causes the rotation of the crank pin 382M and of the disc 382 through 180° in the direction of arrow f378, said rotation taking place freely, that is, without power delivery, due to the presence of free wheel 385; during this phase, the rotational speed of the crank 382 results far higher than that of ring 378 which is caused by the motor 312. During this burning or fast combustion of the mixture, also the mass M moves back abruptly as it is solid with piston 325. This is the phase of the cycle - which, as will result later, is repeated continuously and at elevated frequency - in the course of which, owing to the presence of mass M, the housing 301 receives a propulsion action which moves it forward. In fact, to the total impulse received by the mass M because of the draw action of piston 325 corresponds an equal and opposite impulse received by the mass of said housing because of the action of the combustion gas against the the head 327T of cylinder 327.

Since the thermal cycle is a two-stroke cycle, the described combustion and expansion phase of system 327, 325 is followed by the compression phase, which takes place in a time considerably longer than that of the first phase, after the rotation of the chain toothed ring 378 caused by the auxiliary motor 312. Practically, while the disc 382 has been able to rotate through half a revolution in said first phase, without drawing the ring 378 (whose rotation in the direction of arrow f378 takes place continuously) this ring causes now the rotation of the disc-crank 382 through a further half a revolution and, by the crank mechanism 380, 382, moves the rod 323 forward and causes the piston 325 to perform its compression stroke, while the mass M takes up its position of maximum distance from the frame 315. Also in this significantly slower phase, the mass M receives some impulse which, however, is far less than the one received on the preceding phase, so that the corresponding propulsion effect, in the opposite direction, on the housing 301 may be considered negligible.

Within the cylinder of the system 325, 327, pressurized combustion air is taken in by an auxiliary piston 353 which slides within a cylinder 355 to pump air, sucked through a valve 357, into a pipe 345 one end of which is connected with an inlet (and non-return) valve located on the head 327T. The piston 353 is operated by a rod 351 which has a rack 352 actuated by an idle wheel 349 which is made in turn to rotate by a rack 347 solid with rod 323. When the rod 323 moves in the direction of arrow f323, the rod 351 moves according to arrow f351 thus moving the piston 353 forward for the compression phase. The rod 351 slides guided within a hole of crosspiece 356. The injection of the fuel within the cylinder 327 takes place, almost at the moment the compression phase ends, by means of an injection pump 361 connected via a piping 359 to the injector 339. The injection pump 361 is operated by a roller 360, which is moved via an inclined plane 358 which is displaced by the rod 323 with which it is solid.

As it results from the above, the motor 312 may be of limited power inasmuch as the flywheel 370, which may be made to take up the more suitable steady rotational speed through the variator 310, supplies sufficient energy to cause the piston 325 to perform the compression phase through the free wheel 385 which, in such circumstance, transmits the rotary motion to the crank 382. On the other hand, the unit according to the invention may be provided with a considerably large mass M and with a cylinder-piston system 327-325 of correspondingly appropriate dimensions, so that, with a sufficiently appropriate number of two-stroke cycles of the system 327-325 and with an appropriate supply, the same unit may transmit thrust actions of considerable magnitude to the housing 301.

These results are obtainable, although to a far less extent, by replacing the cylinder-piston 327, 325 system of the unit according to the invention, with a robust compression spring disposed and guided so as to be deformed according to an axis parallel to the longitudinal axis of the housing. In this case, a front end of the spring is made to react, for example, with the base of the U of frame 315, while the rear end is made to react against a plate, solid with the plate 336 and thus rigidly connected to the mass M so as to slide solid therewith. Obviously, the characteristics of the compression spring must be selected according to the magnitude of mass M, inasmuch as said spring - once compressed - must be able to recall the mass abruptly. In place of the above described repeated cycle of a two-stroke internal combustion engine, there occurs an alternation of elastic compressions and of fast expansions (that is, of elastic deformations in opposite direction) of the spring. The crank mechanism 380, 382 with the free wheel device 380, 382 is still present but, missing the supply devices of cylinder 327, the rod 323 may be eliminated and the connecting rod 380 may be articulated directly to the rear of plate 336. The free wheel device 385, while allowing the free expansion of the spring upon the return phase of mass M, provides, following its actuation by the motor 312 and owing to the presence of flywheel 370, for the the compression of the spring and for the simultaneous return of mass M to the forward position.

**Claims**

1. A propulsion apparatus comprising on a housing (101-301) unidirectionally movable in a direction corresponding to an axis thereof: a sliding mass (M) designed to take up a position of maximum distance, with respect to a rotation axis (O-O, Y-Y) in fixed position with respect to the housing, and a retracted position along an axis parallel to said axis of the housing; an auxiliary motor (112-312) which drives into rotation, about an axis orthogonal to said housing axis, a platform with a fixture (115) comprising guide means for the sliding of the said mass and which causes the mass (M) to cyclically take up said position of maximum distance; and means (125, 127 - 325, 327) for causing the sudden return of the mass from said position of maximum distance to the retracted position; the momentum and consequently the impulse acquired by said mass during the return phase being equal to those acquired during said phase by the housing, which accordingly moves repeatedly forward by a given length with a unidirectional movement during each forward and backward movement of said mass, characterized in that the means for the sudden return of the mass in said angular position are made up of a cylinder-piston system (125-127) of an internal combustion engine without crank mechanism, fixed to and rotating solid with said fixture (115) and whose piston (125) is connected rigidly with the mass (M) to slide solid therewith, so that to the travel of the mass (M) from the retracted position to the position of maximum distance correspond the compression phase of the cylinder-piston system (125-127) and the ignition of a mixture for propelling the motor, while the combustion and expansion phase of said system causes the sudden return of the mass from the position of maximum distance to the retracted position; means (161-153, 199-141) being also provided solid with the fixture (115), for the admission of fuel and of combustion air inside the cylinder and for causing the ignition of the corresponding mixture approximately in the above mentioned position of maximum distance of the mass.

2. Apparatus according to claim 1, characterized in that said mass (M) slides outwardly of the cylinder-piston system (125-127) beyond the cylinder head and is connected to the rear of the piston through suitable rods (131).

3. Apparatus according to claim 1 or 2, characterized in that the means for keeping the mass (M) in retracted position and releasing it thereby allowing its moving away, are made up of an eccentric (163) solid with the housing, on the outer profile of which a tappet (169) is engaged solid with a rod (123) fixed to the rear of the piston (127) and axially sliding relative to said fixture, said eccentric being able to cause the retraction of the mass in the absence of the combustion of the mixture within the cylinder.

**4.** Apparatus according to any of claims 1 to 3, characterized in that the cylinder-piston system (125-127) is that of a two-stroke internal combustion engine, with spark-ignition.

**5.** Apparatus according to any of claims 3 to 4, characterized in that the rod (123) wich moves back radially and solid to the piston causes the operation of pump means for the admission within the cylinder of scavenging air and for the injection of the fuel therein.

**6.** Apparatus according to any of claims 1 to 5, characterized in that a sensor (181) - which emits a signal when the centrifugal mass (M) has reached, in correspondence of the above mentioned angular position of the fixture, the position of maximum distance from the axis of rotation (Y-Y), or immediately before - causes the spark-ignition of the mixture compressed inside the cylinder-piston system, said signal determining the interruption of the primary current of a common distributor coil.

**7.** Apparatus according to any of claims 1 to 6, characterized in that it also comprises means for determining the start (especially at low rotation regimes of said fixture) of the radial movement in centrifugal direction of the mass, starting from the position of maximum retraction thereof.

**8.** Apparatus according to claim 7, characterized in that the means for determining the start of the radial movement in centrifugal direction of the mass from its retracted position comprise an eccentric solid with the housing, which acts on a tappet solid with the rod fixed to the rear of the piston.

**9.** Apparatus according to one of claims 7 and 8, characterized in that the eccentric means for determining the start of the radial movement in centrifugal direction of the mass from its retracted position may be supplemented with or replaced by members able to store elastic energy during the retraction phase of the mass, and able to give it back for determining said start.

**10.** A propulsion apparatus comprising on a housing (101-301) unidirectionally movable in a direction corresponding to an axis thereof: a sliding mass (M) designed to take up a position of maximum distance, with respect to a rotation axis (Y-Y) in fixed position with respect to the housing, and a retracted position along an axis parallel to said axis of the housing; an auxiliary motor (312) which causes the mass (M) to cyclically take up said position of maximum distance; and means (325, 327) for causing the sudden return of the mass from said position of maximum distance to the retracted position; the momentum and consequently the impulse acquired by said mass during the return phase being equal to those acquired during said phase by the housing, which accordingly moves repeatedly forward by a given length with a unidirectional movement during each forward and backward movement of said mass; characterized in that it comprises a cylinder-piston system (325, 327) of an internal combustion engine operating according to a two-stroke cycle, whose piston (325) is rigidly connected with the mass (M) in order to slide solid therewith - so that the travel of the mass from the retracted position to the forward position corresponds to the compression phase of the cylinder-piston system and to the ignition of an engine propelling mixture, while the combustion and expansion phase of said system causes the sudden return of the mass from the forward position to the retracted position - and whose crank mechanism (380, 382) does not transmit rotary energy during said expansion owing to the presence of a unidirectional mechanism, i.e. a free wheel device (378, 385) on the crank shaft; an auxiliary motor (312) which, through a drive (310, 376) and said free wheel device, acts on said crank mechanism to cause the piston (325) to run the compression stroke and the mass (M) to run the moving away travel at a speed quite lower than that of the return travel; the momentum and thus the impulse acquired by said mass on the return phase at the high expansion speed of the piston, being equal to that of the mass of the housing, which, therefore, during each cycle of said cylinder-piston system moves repeatedly forward by a given length, the unidirectional motion thus taking place with a speed which is higher the greater the number of cycles of the cylinder-piston system per unit time.

**11.** Apparatus according to claim 10, characterized in that said cylinder-piston system is solid with a frame (315) fixed to said housing (301, 314) and that said mass slides outwardly of the cylinder-piston system past the cylinder head and is connected to the rear of the piston through suitable rods.

**12.** Apparatus according to claim 10 or 11, characterized in that a rod (323) axially moving backwards of and solid with the piston (325) causes the operation of pump means (353, 355) for the admission within the cylinder (327) of scavenging air, and of pump means (361) for the injection of the fuel.

13. Apparatus according to claim 12, characterized in that to the end of said rod (323) opposite to the one connected with the piston (325) there is articulated the connecting rod (380) of the crank mechanism of the cylinder-piston system.

14. Apparatus according to claim 13, characterized in that the crank member (382) of said crank mechanism is shaped like a disc from which the crank pin projects, said disc making up the driven member of the free wheel device (385).

15. Apparatus according to claims 13 and 14, characterized in that the driving member (378) of said free wheel device (385) is of annular shape and encircles said disc-shaped crank.

16. Apparatus according to claims 13 to 15, characterized in that the driving member (378) of said free wheel device is driven into continuous rotation by said auxiliary motor (312) through a drive comprising a flywheel (370) and speed variation means (310).

17. Apparatus according to claim 10, characterized in that the cylinder-piston system (327, 325) of an internal combustion engine operating according to a two-stroke cycle is replaced by a compression spring disposed and guided so as to be deformed according to an axis parallel to the longitudinal axis of the housing, one end of which spring reacts against a crosspiece of a frame solid with the housing, while the other end reacts against a plate rigidly connected to the mass to slide solid therewith; to said plate the connecting rod of said crank mechanism being articulated and the free wheel device allowing the sudden expansion of the spring with consequent sudden return of the mass, and allowing afterwards the compression of the same spring simultaneously to the return of the mass to the forward position.

**Patentansprüche**

1. Vortriebsvorrichtung, die auf einem Gehäuse (101-301), das unidirektional in Richtung einer Achse desselben beweglich ist, aufweist: eine verschieblich Masse (M), die längs einer zu der Gehäuseachse parallelen Achse eine Position maximalen Abstandes, bezogen auf eine relativ zum Gehäuse festgelegte Drehachse (O-O, Y-Y), und eine zurückgezogene Position einnehmen kann; einen Hilfsmotor (112-312), der eine Plattform mit einer Verankerung (115), die mit Führungsmittel für die Verschiebung der Masse aufweist, zur Drehung um eine zu der Gehäuseachse rechtwinkelige Achse antreibt und zyklisch die Bewegung der Masse (M) in die Position des maximalen Abstandes bewirkt; und Mittel (125, 127 - 325, 327) zum Bewirken der plötzlichen Rückkehr der Masse aus der Position maximalen Abstandes in die zurückgezogene Position; wobei das Moment und damit der Impuls, die die Masse während der Rückkehrphase aufnimmt, gleich denjenigen sind, die das Gehäuse während dieser Phase aufnimmt, welches sich dementsprechend wiederholt um eine vorgegebene Strecke vorwärtsbewegt in einer gleichgerichteten Bewegung während jeder Vorwärts- und Rückwärtsbewegung der Masse, dadurch **gekennzeichnet**, daß die Mittel für die plötzliche Rückkehr der Masse in die Winkelstellung von einem Kolben-Zylinder-System (125-127) einer Brennkraftmaschine ohne Kurbelsystem gebildet sind, die an der Halterung (115) befestigt ist und mit dieser gemeinsam rotiert und deren Kolben (125) starr mit der Masse (M) verbunden ist, um sich gemeinsam mit dieser zu verschieben, so daß die Verschiebung der Masse (M) von der zurückgezogenen Position in die Position maximalen Abstandes der Kompressionsphase des Kolben-Zylinder-Systems (125-127) und der Zündung eines Gemischs zum Antreiben des Motors entspricht, während die Verbrennungs- und Expansionsphase des Systems die plötzliche Rückkehr der Masse aus der Position maximalen Abstandes in die zurückgezogene Position bewirkt; wobei ferner Mittel (161-153; 199-141) an der Halterung (115) vorgesehen sind für den Einlaß von Brennstoff und Verbrennungsluft in den Zylinder und zum Bewirken der Zündung des entsprechenden Gemischs annähernd in der Position des maximalen Abstandes der Masse.

2. Vorrichtung nach Anspruch 1, dadurch **gekennzeichnet**, daß sich die Masse (M) nach außen von dem Kolben-Zylinder-System (125-127) über den Zylinderkopf hinaus verschiebt und mit der Rückseite des Kolbens durch passende Stangen (131) verbunden ist.

3. Vorrichtung nach Anspruch 1 oder 2, dadurch **gekennzeichnet**, daß die Mittel zum Halten der Masse (M) in der zurückgezogenen Position und Freigeben, was dadurch ihr Entfernen gestattet, aus einem mit dem Gehäuse festen Exzenter (163) gebildet sind, an dessen Außenprofil eine Exzenterrolle (169) in Eingriff steht, die fest mit einer Stange (123) ist, die an der Rückseite des Kolbens (127) befestigt ist und sich axial, relativ zu der Halterung, verschiebt, wobei der Exzenter imstande ist, das Zurückziehen der Masse bei fehlender Verbrennung des Gemisches in dem Zylinder zu bewirken.

4. Vorrichtung nach einem der Ansprüche 1 bis 3, dadurch **gekennzeichnet**, daß das Kolben-Zylinder-System (125 - 127) dasjenige einer Zweitakt-Brennkraftmaschine mit Funkenzündung ist.

5. Vorrichtung nach einem der Ansprüche 3 bis 4, dadurch **gekennzeichnet**, daß die Stange (123), die sich radial zurückbewegt und fest an dem Kolben ist, den Betrieb einer Pumpeneinrichtung für den Einlaß von Spülluft in den Zylinder und für die Einspritzung des Kraftstoffes darin bewirkt.

6. Vorrichtung nach einem der Ansprüche 1 bis 5, dadurch **gekennzeichnet,** daß ein Sensor (181), der ein Signal abgibt, wenn die zentrifugale Masse (M), in Übereinstimmung der vorstehend erwähnten Winkelstellung der Halterung, die Position des maximalen Abstandes von der Drehachse (Y-Y) erreicht hat, oder kurz vorher, die Funkenzündung des in dem Kolben-Zylinder-System komprimierten Gemisches bewirkt, wobei das Signal die Unterbrechung des Primärstromes einer gewöhnlichen Zündspule bestimmt.

7. Vorrichtung nach einem der Ansprüche 1 bis 6, dadurch **gekennzeichnet,** daß sie auch Mittel zum Bestimmen des Beginns (besonders bei Betriebszuständen der Halterung mit niedriger Rotation) der radialen Bewegung in zentrifugaler Richtung der Masse aufweist, die aus der Position des maximalen Zurückziehens derselben beginnt.

8. Vorrichtung nach Anspruch 7, dadurch **gekennzeichnet**, daß die Mittel zum Bestimmen des Beginns der radialen Bewegung in zentrifugaler Richtung der Masse aus ihrer zurückgezogenen Position einen Exzenter fest mit dem Gehäuse aufweisen, der auf eine Exzenterrolle fest mit der Stange wirkt, die an der Rückseite des Kolbens befestigt ist.

9. Vorrichtung nach einem der Ansprüche 7 und 8, dadurch **gekennzeichnet**, daß die Exzentermittel zum Bestimmen des Beginns der radialen Bewegung in zentrifugaler Richtung der Masse aus ihrer zurückgezogenen Position durch Bauteile ergänzt oder ersetzt werden können, die imstande sind, elastische Energie während der Zurückziehphase der Masse zu speichern, und imstande sind, sie zum Bestimmen des Beginns zurückzugeben.

10. Vortriebsvorrichtung, die auf einem Gehäuse (101-301), das unidirektional in Richtung einer Achse desselben beweglich ist, aufweist: eine verschiebliche Masse (M), die längs einer zu der Gehäuseachse parallelen Achse eine Position maximalen Abstandes, bezogen auf eine relativ zum Gehäuse festgelegte Drehachse (Y-Y), und eine zurückgezogene Position einnehmen kann; einen Hilfsmotor (312) der zyklisch die Bewegung der Masse (M) in die Position des maximalen Abstandes bewirkt; und Mittel (325, 327) zum Bewirken der plötzlichen Rückkehr der Masse aus der Position maximalen Abstandes in die zurückgezogene Position; wobei das Moment und damit der Impuls, die die Masse während der Rückkehrphase aufnimmt, gleich denjenigen sind, die das Gehäuse während dieser Phase aufnimmt, welches sich dementsprechend wiederholt um eine vorgegebene Strecke vorwärtsbewegt in einer gleichgerichteten Bewegung während jeder Vorwärts- und Rückwärtsbewegung der Masse; dadurch **gekennzeichnet,** daß sie ein Kolben-Zylinder-System (325, 327) einer Brennkraftmaschine aufweist, die nach einem Zweitakt-Arbeitsablauf arbeitet, deren Kolben (325) mit der Masse (M) starr verbunden ist, um sich fest damit zu verschieben, so daß die Bewegung der Masse aus der zurückgezogenen Position in die Vorwärtsposition der Kompressionsphase des Kolben-Zylinder-Systems und der Zündung eines Maschinenantriebsgemisch, während die Verbrennungs- und Expansionsphase des Systems die plötzliche Rückkehr der Masse aus der Vorwärtsposition in die zurückgezogene Position bewirkt und deren Kurbelmechanismus (380, 382) während der Expansion keine umlaufende Energie wegen des Vorhandenseins eines unidirektionalen Mechanismus überträgt, d.h. eine Freilaufvorrichtung (378, 385), auf der Kurbelwelle; einen Hilfsmotor (312), welcher durch einen Antrieb (310, 376) und der Freilaufvorrichtung auf den Kurbelmechanismus wirkt, um zu bewirken, daß der Kolben (325) im Kompressionstakt arbeitet und daß die Masse (M) die Entfernbewegung bei einer Geschwindigkeit betreibt, die fast niedriger ist, als die der Rückkehrbewegung; wobei das Moment und damit der Impuls, die die Masse während der Rückkehrphase aufnimmt bei der hohen Expansionsgeschwindigkeit des Kolbens gleich derjenigen der Masse des Gehäuses ist, welches darum während jedes Arbeitsablaufs des Kolben-Zylinder-Systems wiederholt um eine vorgegebene Strecke vorwärtsbewegt, wobei die gleichgerichtete Bewegung somit mit einer Geschwindigkeit stattfindet, die höher ist, je größer die Anzahl der Arbeitsabläufe des Kolben-Zylinder-Systems pro Zeiteinheit ist.

11. Vorrichtung nach Anspruch 10, dadurch **gekennzeichnet**, daß das Kolben-Zylinder-System fest mit einem Rahmen (315) ist, der an dem Gehäuse (301, 314) befestigt ist und daß die Masse sich nach außen des Kolben-Zylinder-Systems über den Zylinderkopf hinaus verschiebt und mit der Rückseite des Kolbens durch passende Stangen verbunden ist.

12. Vorrichtung nach Anspruch 10 oder 11, dadurch **gekennzeichnet**, daß eine Stange (323), die sich von dem Kolben (325) axial nach hinten bewegt und fest mit ihm den Betrieb von Pumpenmitteln (353, 355) für den Einlaß von Spülluft in den Zylinder (327) und von Pumpenmitteln (361) für die Einspritzung des Kraftstoffes bewirkt.

13. Vorrichtung nach Anspruch 12, dadurch **gekennzeichnet**, daß die Verbindungsstange (380) des Kurbelmechanismus des Kolben-Zylinder-Systems an dem Ende der Stange (323) gegenüber demjenigen, das mit dem Kolben (325) verbunden ist, angelenkt ist.

14. Vorrichtung nach Anspruch 13, dadurch **gekennzeichnet**, daß das Kurbelbauteil (382) des Kurbelmechanismus wie eine Scheibe geformt ist, aus der der Kurbelzapfen hervorragt, wobei die Scheibe das getriebene Bauteil der Freilaufvorrichtung (385) bildet.

15. Vorrichtung nach Anspruch 13 und 14, dadurch **gekennzeichnet,** daß das Antriebselement (378) der Freilaufvorrichtung (385) ringförmig ist und das scheibenförmige Kurbelbauteil (382) umgibt.

16. Vorrichtung nach den Ansprüchen 13 bis 15, dadurch **gekennzeichnet,** daß das Antriebselement (378) der Freilaufvorrichtung zu kontinuierlicher Rotation angetrieben ist durch den Hilfsmotor (312) über ein Getriebe mit einem Schwungrad (370) und einem Drehzahlveränderer (310).

17. Vorrichtung nach Anspruch 10, dadurch **gekennzeichnet,** daß das Kolbenzylindersystem (327,325) eines Zweitakt-Verbrennungsmotors ersetzt ist durch eine Druckfeder, die so angeordnet und geführt ist, daß sie entlang einer Achse parallel zur Längsachse des Gehäuses verformbar ist, wobei ein Ende der Feder gegen ein Querstück eines gehäusefesten Rahmens wirkt, während das andere Ende gegen eine Platte wirkt, die mit der Masse starr und gemeinsam verschiebbar verbunden ist, wobei mit dieser Platte die Verbindungsstange des Kurbelmechanismus gelenkig verbunden ist und die Freilaufvorrichtung die plötzliche Ausdehnung der Feder mit nachfolgender plötzlicher Rückkehrbewegung der Masse gestattet und danach die Kompression dieser Feder gleichzeitig mit der Rückkehr der Masse in die vordere Position gestattet.

## Revendications

1. Appareil de propulsion comportant, sur un carter (101 - 301) pouvant se déplacer d'une manière unidirectionnelle dans un sens correspondant à un de ses axes: une masse coulissante (M) conçue pour prendre une position de distance maximale, par rapport à un axe de rotation (O-O, Y-Y) dans une position fixe par rapport au carter, et une position de recul sur un axe parallèle audit axe du carter; un moteur auxiliaire (112-312) qui fait tourner, autour d'un axe perpendiculaire audit axe du carter, une plate-forme avec une installation (115) comprenant un moyen de guidage pour le coulissement de ladite masse et qui amène cycliquement la masse (M) à prendre ladite position de distance maximale; et des moyens (125, 127 - 325, 327) pour provoquer le brusque retour de la masse depuis ladite position de distance maximale jusqu'à la position de recul; l'énergie cinétique et, par conséquent, l'impulsion acquise par ladite masse pendant la phase de retour étant égales à celles acquises pendant ladite phase par le carter, qui avance donc d'une manière répétée sur une distance donnée selon un mouvement unidirectionnel pendant chaque mouvement d'avance et de recul de ladite masse, caractérisé en ce que les moyens pour le brusque retour de la masse dans ladite position angulaire sont constitués par un dispositif cylindre-piston (125-127) d'un moteur à explosion sans transmission par manivelle, fixé à ladite installation (115) et tournant solidairement avec celle-ci, et dont le piston (125) est relié d'une manière rigide à la masse (M) pour coulisser solidairement avec elle, de façon que la course de la masse (M) depuis la position de recul jusqu'à la position de distance maximale corresponde à la phase de compression du dispositif cylindre-piston (125-127) et à l'allumage d'un mélange de propulsion du moteur, tandis que la phase de combustion et de détente dudit système provoque le brusque retour de la masse depuis la position de distance maximale jusqu'à la position de recul; des moyens (161-153, 199-141) faisant corps avec l'installation (115) étant également prévus pour l'admission de carburant et d'air de combustion à l'intérieur du cylindre et pour provoquer l'allumage du mélange correspondant approximativement dans la position précitée de distance maximale de la masse.

2. Appareil selon la revendication 1, caractérisé en ce que ladite masse (M) coulisse vers l'extérieur du dispositif cylindre-piston (125-127) au-delà de la culasse et est reliée à l'arrière du piston par l'intermédiaire de barres appropriées (131).

3. Appareil selon la revendication 1 ou 2, caractérisé en ce que le moyen pour maintenir la masse (M) en position de recul et pour la libérer en lui permettant de ce fait de s'éloigner est constitué par un excentrique (163) faisant corps avec le carter, sur le pourtour extérieur duquel vient appuyer un poussoir (169) solidaire d'une tige (123) fixée à l'arrière du piston (127) et coulissant axialement par rapport à ladite installation, ledit excentrique étant apte à provoquer le recul de la masse en l'absence de combustion de mélange à l'intérieur du cylindre.

4. Appareil selon l'une quelconque des revendications 1 à 3, caractérisé en ce que le dispositif cylindre-piston (125-127) est celui d'un moteur à explosion à deux temps, à allumage par étincelle.

5. Appareil selon l'une quelconque des revendications 3 et 4, caractérisé en ce que la tige (123) qui recule radialement et fait corps avec le piston met en marche un moyen formant pompe pour l'admission d'air de balayage dans le cylindre et pour l'injection du carburant dans celui-ci.

6. Appareil selon l'une quelconque des revendications 1 à 5, caractérisé en ce qu'un détecteur (181) - qui émet un signal lorsque la masse centrifuge (M) a atteint, en fonction de la position angulaire précitée de l'installation, la position de distance maximale par rapport à l'axe de rotation (Y-Y), ou juste avant - provoque l'allumage par étincelle du mélange comprimé à l'intérieur du dispositif cylindre-piston, ledit signal déterminant l'interruption du courant primaire d'une bobine d'allumage commune.

7. Appareil selon l'une quelconque des revendications 1 à 6, caractérisé en ce qu'il comporte aussi un moyen pour déterminer le début (surtout à des régimes de faible rotation de ladite installation) du mouvement radial centrifuge de la masse, en partant de la position de recul maximal de celle-ci.

8. Appareil selon la revendication 7, caractérisé en ce que le moyen pour déterminer le début du mouvement radial centrifuge de la masse depuis sa position de recul comporte un excentrique faisant corps avec le carter et agissant sur un poussoir faisant corps avec la tige fixée à l'arrière du piston.

9. Appareil selon l'une des revendications 7 et 8, caractérisé en ce que l'excentrique pour déterminer le début du mouvement radial centrifuge de la masse depuis sa position de recul peut être complété ou remplacé par des éléments aptes à emmagasiner une énergie élastique pendant la phase de recul de la masse, et aptes à la restituer pour déterminer ledit début.

10. Appareil de propulsion comportant, sur un carter (101-301) pouvant se déplacer d'une manière unidirectionnelle dans un sens correspondant à un de ses axes: une masse coulissante (M) conçue pour prendre une position de distance maximale, par rapport à un axe de rotation (Y-Y) dans une position fixe par rapport au carter, et une position de recul sur un axe parallèle audit axe du carter; un moteur auxiliaire (312) qui amène cycliquement la masse (M) à prendre ladite position de distance maximale; et des moyens (325, 327) pour provoquer le brusque retour de la masse depuis ladite position de distance maximale jusqu'à la position de recul; l'énergie cinétique et, par conséquent, l'impulsion acquise par ladite masse pendant la phase de retour étant égales à celles acquises pendant ladite phase par le carter, qui avance donc d'une manière répétée sur une distance donnée selon un mouvement unidirectionnel pendant chaque mouvement d'avance et de recul de ladite masse, caractérisé en ce qu'il comporte un dispositif cylindre-piston (325, 327) de moteur à explosion fonctionnant selon un cycle à deux temps, dont le piston (325) est relié d'une manière rigide à la masse (M) pour coulisser solidairement avec elle, de façon que la course de la masse (M) depuis la position de recul jusqu'à la position avancée corresponde à la phase de compression du dispositif cylindre-piston et à l'allumage d'un mélange de propulsion du moteur, tandis que la phase de combustion et de détente dudit dispositif provoque le brusque retour de la masse depuis la position avancée jusqu'à la position de recul - et dont le mécanisme (380, 382) à manivelle ne transmet pas d'énergie de rotation pendant ladite détente grâce à la présence d'un mécanisme unidirectionnel, à savoir un dispositif de roue libre (378, 385) sur le vilebrequin; un moteur auxiliaire (312) qui, par l'intermédiaire d'une transmission (310, 376) et dudit dispositif de roue libre, agit sur ledit mécanisme à manivelle pour amener le piston (325) à effectuer la course de compression et la masse (M) à effectuer la course d'éloignement à une vitesse très inférieure à celle de la course de retour; l'énergie cinétique et donc l'impulsion acquise par ladite masse lors de la phase de retour à la grande vitesse de détente du piston, étant égales à celles de la masse du carter , lequel, pendant chaque cycle dudit dispositif cylindre-piston, avance donc d'une manière répétée sur une distance donnée, le mouvement unidirectionnel s'effectuant ainsi à une vitesse qui est d'autant plus grande que le nombre de cycles du dispositif cylindre-piston par unité de temps est élevé.

11. Appareil selon la revendication 10, caractérisé en ce que ledit dispositif cylindre-piston fait corps avec un bâti (315) fixé audit châssis (301, 314) et en ce que ladite masse coulisse vers l'extérieur du dispositif cylindre-piston jusqu'au-delà de la culasse et est reliée à l'arrière du piston par l'intermédiaire de barres appropriées.

12. Appareil selon la revendication 10 ou 11, caractérisé en ce qu'une tige (323) se déplaçant axialement vers l'arrière du piston (325) et faisant corps avec ce dernier met en marche un moyen formant pompe (353, 355) pour l'admission d'air de balayage dans le cylindre (327) et un moyen formant pompe (361) pour l'injection du carburant.

13. Appareil selon la revendication 12, caractérisé en ce qu'avec l'extrémité de ladite tige (323) opposée à celle relié au piston (325) est articulée la bielle (380) du mécanisme à manivelle du dispositif cylindre-piston.

14. Appareil selon la revendication 13, caractérisé en ce que la manivelle (382) dudit mécanisme à manivelle se présente sous la forme d'un disque duquel dépasse le maneton, ledit disque constituant l'élément mené du dispositif de roue libre (385).

15. Appareil selon les revendications 13 et 14, caractérisé en ce que l'élément d'entraînement (378) dudit dispositif de roue libre (385) a une forme annulaire et entoure ladite manivelle en forme de disque.

16. Appareil selon les revendications 13 à 15, caractérisé en ce que l'élément d'entraînement (378) dudit dispositif de roue libre est entraîné en rotation continue par ledit moteur auxiliaire (312) par l'intermédiaire d'un mécanisme d'entraînement comprenant un volant (370) et un variateur (310) de vitesse.

17. Appareil selon la revendication 10, caractérisé en ce que le dispositif cylindre-piston (327, 325) d'un moteur à explosion fonctionnant selon un cycle à deux temps est remplacé par un ressort de compression disposé et guidé de façon à se déformer selon un axe parallèle à l'axe longitudinal du carter, une extrémité dudit ressort réagissant contre une pièce transversale d'un bâti faisant corps avec le carter, tandis que l'autre extrémité réagit contre une plaque reliée d'une manière rigide à la masse pour coulisser solidairement avec celle-ci, la bielle dudit mécanisme à manivelle étant articulée avec ladite plaque et le dispositif de roue libre permettant une brusque détente du ressort provoquant donc un brusque retour de la masse, et permettant ensuite le compression du même ressort en même temps que le retour de la masse dans la position avancée.

FIG.1

FIG.2A

FIG.2B

FIG.2C

FIG.3

# FIG.6

EP 0 360 764 B1

FIG.4

FIG.5

EP 0 360 764 B1

FIG.7

EP 0 360 764 B1

FIG.8

EP 0 360 764 B1

EP 0 360 764 B1

FIG.9A

FIG.9B

FIG.9C

FIG.9D

23

FIG.10

FIG.11